# EUROPEAN PATENT APPLICATION

(11) **EP 3 957 472 A1**
(43) Date of publication of application: **23.02.2022**
(21) Application number: 20792154.5
(22) Date of filing: 19.02.2020
(51) Int. Cl.: B29L 30/00, B29C 33/02, B29C 33/64, B29C 35/02

(54) **RELEASE AGENT COMPOSITION FOR TIRE MOLDING AND BLADDER FOR TIRE MOLDING**

(30) Priority: 15.04.2019 JP 2019077319
(71) Applicant: Shin-Etsu Chemical Co., Ltd., Tokyo 100-0005 (JP)
(72) Inventor: HAMAJIMA Yuta, Annaka-shi, Gunma 379-0224 (JP); AOKI Shunji, Annaka-shi, Gunma 379-0224 (JP); TAKAHASHI Nobuaki, Kobe-shi, Hyogo 651-0072 (JP)
(74) Representative: Wibbelmann, Jobst
(86) International application number: PCT/JP2020/006422
(87) International publication number: WO 2020/213250

(57) **Abstract**

The present invention is a release agent composition for tire-molding containing: (A) 100 parts by mass of an organopolysiloxane containing at least two hydroxy groups bonded to a silicon atom in one molecule and having a viscosity at 25°C of 10,000 mPa·s or higher; (B) 10 to 100 parts by mass of an organohydrogenpolysiloxane containing at least two hydrogen atoms bonded to a silicon atom in one molecule relative to 100 parts by mass of the component (A); (C) 10 to 10,000 parts by mass of water relative to 100 parts by mass of the component (A); and (D) 2 to 70 parts by mass of a polyvinyl alcohol relative to 100 parts by mass of the component (A). This provides a release agent composition for tire-molding excellent in release that makes it possible to mold and vulcanize tires repeatedly in succession a considerably larger number of times than before without applying a release agent again after once applying a release agent.

## Description

### TECHNICAL FIELD

The present invention relates to: a release agent composition for tire-molding; and a bladder for tire-molding coated with the release agent.

### BACKGROUND ART

When molding and vulcanizing a tire, a rubber bag called a bladder or air bag (hereinafter, referred to as a bladder) is inserted inside a tire before molding and vulcanizing (hereinafter, referred to as a green tire in some cases). A high-temperature and high-pressure gas (for example, a vapor of about 180°C, etc.) or liquid is introduced into the inside of the bladder in order to press the green tire to a die and heat under pressure. Thus, molding and vulcanization are performed. In this case, since the inner surfaces of the bladder and the green tire both use rubber as a material, a release agent is necessary between the two.

As conventionally employed methods, the following two types are known: (1) a method of applying an aqueous or solvent-based release agent called inside paint to the entire inner surface of a green tire to be molded and vulcanized; and (2) a method of applying a silicone-based release agent to a bladder surface in order to improve the detachment between the green tire and the bladder, and once the release agent is applied to the bladder surface, the tire is molded and vulcanized in succession without newly applying the release agent to the bladder.

Examples of the inside paint in the above method (1) include those proposed in Patent Documents 1 and 2. That is, Patent Document 1 proposes an aqueous emulsion containing a diorganopolysiloxane, and dispersed therein, an inorganic silicate that has been rendered hydrophobic by reaction on the surface with an organosilicon compound. Meanwhile, Patent Document 2 proposes a powdery release agent composition including a copolymer of a dialkylpolysiloxane and a polyalkylene glycol and mica or talc.

In addition, as the release agent to be applied to the bladder surface in the above method (2), examples include methods proposed in the following Patent Documents 3 to 6. That is, Patent Document 3 proposes a lubricant composition that uses a functional-group-containing organopolysiloxane latex. Meanwhile, Patent Document 4 proposes a lubricant composition that undergoes self-crosslinking by carbon dioxide gas containing an aminoalkyl-group-modified organopolysiloxane and a surfactant. Meanwhile, Patent Document 5 proposes a method of configuring a release agent film on a bladder by applying a mixture of a silicone rubber that polymerizes under the action of water or heat and a silicone release agent to the bladder, and exposing to air containing water or heat. Meanwhile, Patent Document 6 proposes a lubricant composition containing three different kinds of certain polysiloxanes.

Furthermore, Patent Document 7 proposes a bladder having two or more release lubricating layers formed by applying to the innermost layer, a room-temperature-curable silicone layer having adhesiveness with bladder rubber, and forming a condensation type silicone resin layer on the outermost layer. In addition, Patent Document 8 proposes a method of using a vulcanizing bladder surface-treated with a silicone composition containing an organopolysiloxane, a methylhydrogenpolysiloxane, silica, and an organic acid salt of a metal.

In addition, Patent Document 9 proposes a method of using a release agent for tire-molding containing: an inorganic component including powder; a silicone component; a surfactant; a polyhydric alcohol; and water.

However, the above (1) method of applying a release agent to the entire inner surface of a green tire to be molded and vulcanized has a problem that the process becomes complicated, and at the same time, contamination around the equipment occurs during application. In addition, even more serious problems include: a problem that the inside paint goes into a junction of an inner liner of a tire, causing detachment of the inner liner junction, and tire failure occurs; a problem that an immense amount of space is required for a stock point for storing a tire coated with an inside paint until introduced into a molding process; and so forth.

Patent Document 10 proposes a method of using a release agent for the inner surface of a tire containing an alkyl silicone, a certain silicone-based nonionic surfactant, an inorganic component including powder, and water. Applying the release agent once makes it possible to repeatedly vulcanize and release tires. However, in the technology proposed in Patent Document 10, the number of times releasing can be repeated is four at maximum, and in order to manufacture tires efficiently, it is necessary to increase considerably the number of times tires can be vulcanized and released repeatedly at one application of a release agent.

Meanwhile, in the above (2) method of applying a silicone-based release agent to a bladder surface, the adhesiveness between the release agent film and the bladder is not sufficient when a technique of using a silicone-based aqueous release agent is employed, and durability of the releasing effect of the tire bladder is insufficient. In addition, the wettability of the release agent to the bladder rubber is also insufficient, so that there is a problem that the release agent cannot be applied to the bladder uniformly. With a technique using a solvent-based release agent, wettability to a bladder can be improved. However, measures need to be taken regarding the environment since a solvent is used, and in addition, the adhesive effect between the release agent film and the bladder is insufficient, and there is a problem that the release agent film becomes detached during use.

In the technique proposed in Patent Document 7, two or more layers are applied, and the outermost layer that contacts the tire inner surface on initial use is made of a silicone resin layer to ensure sliding property in order to suppress the detachment. However, coating needs to be performed two or more times, and moreover, release is also insufficient.

### CITATION LIST

### PATENT LITERATURE

Patent Document 1: JP S53-42243 A
Patent Document 2: JP S52-86477 A
Patent Document 3: JP S60-179211 A
Patent Document 4: JP S60-229719 A
Patent Document 5: JP S59-106948 A
Patent Document 6: JP H11-198150 A
Patent Document 7: JP H6-339927 A
Patent Document 8: JP S62-275711 A
Patent Document 9: JP 5762810 B
Patent Document 10: JP 5802525 B

### SUMMARY OF INVENTION

### TECHNICAL PROBLEM

In view of the above circumstances, an object of the present invention is to provide a release agent composition for tire-molding excellent in release that makes it possible to mold and vulcanize tires repeatedly in succession a considerably larger number of times than before without applying a release agent again after once applying a release agent.

### SOLUTION TO PROBLEM

To achieve the above-described object, the present invention provides a release agent composition for tire-molding comprising:
(A) 100 parts by mass of an organopolysiloxane containing at least two hydroxy groups bonded to a silicon atom in one molecule and having a viscosity at 25°C of 10,000 mPa·s or higher;
(B) 10 to 100 parts by mass of an organohydrogenpolysiloxane containing at least two hydrogen atoms bonded to a silicon atom in one molecule relative to 100 parts by mass of the component (A);
(C) 10 to 10,000 parts by mass of water relative to 100 parts by mass of the component (A); and
(D) 2 to 70 parts by mass of a polyvinyl alcohol relative to 100 parts by mass of the component (A).

By applying the inventive release agent composition for tire-molding to a tire bladder, favorable release can be achieved constantly when molding and vulcanizing a tire for bicycles, automobiles, other vehicles, and airplanes. Moreover, it becomes possible to mold and vulcanize ten or more tires repeatedly in succession without reapplying a release agent after once applying a release agent.

In this event, (E) 5 to 50 parts by mass of a surfactant is preferably further contained relative to 100 parts by mass of the component (A).

In this manner, the coating property of the inventive release agent composition for tire-molding can be improved, and the composition can be used more suitably.

Furthermore, (F) 0.1 to 10 parts by mass of a condensation reaction catalyst is preferably further contained relative to 100 parts by mass of the component (A).

In this manner, condensation reaction of the inventive release agent composition for tire-molding can be promoted, and the composition can be used more suitably.

In addition, the present invention provides a bladder for tire-molding coated with the above-described release agent composition for tire-molding.

With the inventive bladder for tire-molding, favorable release can be achieved constantly when molding and vulcanizing a tire for bicycles, automobiles, other vehicles, airplanes, etc. Moreover, it becomes possible to mold and vulcanize ten or more tires repeatedly in succession without reapplying a release agent.

### ADVANTAGEOUS EFFECTS OF INVENTION

By applying the inventive release agent composition for tire-molding to a bladder, favorable release can be achieved constantly when molding and vulcanizing a tire for bicycles, automobiles, other vehicles, airplanes, etc. Moreover, it becomes possible to mold and vulcanize ten or more tires with no problems regarding inner appearance repeatedly in succession without reapplying a release agent after once applying a release agent. Accordingly, productivity of tires can be enhanced, and costs can be reduced.

### DESCRIPTION OF EMBODIMENTS

Hereinafter, the present invention will be described in detail, but the present invention is not limited thereto.

The present inventors have earnestly studied to solve the above-described problems, and found out that a release agent including an organopolysiloxane containing hydroxy groups bonded to a silicon atom, an organohydrogenpolysiloxane containing hydrogen atoms bonded to a silicon atom, and a polyvinyl alcohol is excellent in release at the time of tire-molding, and came to complete the present invention.

That is, the present invention is a release agent composition for tire-molding comprising:
(A) 100 parts by mass of an organopolysiloxane containing at least two hydroxy groups bonded to a silicon atom in one molecule and having a viscosity at 25°C of 10,000 mPa·s or higher;
(B) 10 to 100 parts by mass of an organohydrogenpolysiloxane containing at least two hydrogen atoms bonded to a silicon atom in one molecule relative to 100 parts by mass of the component (A);
(C) 10 to 10,000 parts by mass of water relative to 100 parts by mass of the component (A); and
(D) 2 to 70 parts by mass of a polyvinyl alcohol relative to 100 parts by mass of the component (A).

### [Release Agent Composition for Tire-Molding]

The inventive release agent composition for tire-molding contains the following components (A) to (D).

### <Component (A)>

The component (A) is an organopolysiloxane containing at least two hydroxy groups bonded to a silicon atom in one molecule and having a viscosity at 25°C of 10,000 mPa·s or higher. In addition, the content of the component (A) contained in the inventive release agent composition for tire-molding is to be 100 parts by mass.

As the organopolysiloxane, a conventionally known organopolysiloxane can be used. A group bonded to a silicon atom other than the hydroxy group is not particularly limited, but is preferably a substituted or unsubstituted monovalent hydrocarbon group or alkoxy group having 1 to 20 carbon atoms, preferably 1 to 10 carbon atoms. Examples of the monovalent hydrocarbon group include alkyl groups such as a methyl group, an ethyl group, a propyl group, a butyl group, a pentyl group, a hexyl group, a heptyl group, an octyl group, a nonyl group, and a decyl group; cycloalkyl groups such as a cyclopentyl group and a cyclohexyl group; aryl groups such as a phenyl group, a naphthyl group, and a tolyl group; halogenated alkyl groups which are obtained by substituting some or all of the hydrogen atoms bonded to the carbon atoms of these groups with a halogen atom such as chlorine and fluorine; and the like. Examples of the alkoxy group include a methoxy group, an ethoxy group, a propoxy group, a butoxy group, and the like. In particular, alkyl groups such as a methyl group, an ethyl group, a propyl group, and a butyl group or a methoxy group or an ethoxy group are preferable, and a methyl group is particularly preferable. In particular, 80 mol% or more of the groups bonded to a silicon atom other than hydroxy groups are particularly preferably methyl groups. The molecular structure of the organopolysiloxane is not particularly limited, and can be linear, branched, cyclic, or a three-dimensional crosslinking structure. In particular, a linear organopolysiloxane is preferable industrially. The organopolysiloxane may be of one kind or may be a mixture of two or more kinds.

Examples of the component (A) include a linear or branched organopolysiloxane represented by the following formula (1).

(R¹₃SiO_{1/2})ₐ(R¹₂(HO)SiO_{1/2})_{b}

(R¹₂SiO_{2/2})_{c}(R¹(HO)SiO_{2/2})_{d}

(R¹SiO_{3/2})ₑ((HO)SiO_{3/2})_{f}(SiO_{4/2})_{g} ··· (1)

In the formula (1), R¹ each independently represents an alkoxy group such as a methoxy group and an ethoxy group, or a substituted or unsubstituted monovalent hydrocarbon group having 1 to 20 carbon atoms, preferably 1 to 10 carbon atoms. Examples of the monovalent hydrocarbon group include the same ones as the above-mentioned monovalent hydrocarbon groups including alkyl groups such as a methyl group, an ethyl group, a propyl group, and a butyl group, aryl groups such as a phenyl group, alkenyl groups such as a vinyl group and a propenyl group, etc.

In the formula (1), b+d+f is 2 or more, and preferably, b+d is 2 or more.

In addition, in the formula (1), a+b+c+d+e+f+g is a number at which the absolute viscosity of the organopolysiloxane at 25°C becomes 10,000 mPa·s or higher. Furthermore, preferably, "a" and "b" are numbers of 2 to 100, "c" is a number of 1,000 or more, "d" is a number of 0 to 100, and "e", "f", and "g" are numbers of 0 to 300.

The organopolysiloxane of the component (A) has an absolute viscosity at 25°C of 10,000 mPa·s or higher, and preferably an absolute viscosity at 25°C of 500,000 mPa·s or higher, further preferably an absolute viscosity at 25°C of 1,000,000 mPa·s or higher. Note that in the present invention, absolute viscosity is a value at 25°C measured with a BM type rotary viscometer.

One kind of the component (A) may be used, or two or more kinds thereof may be used in combination.

More specific examples of the component (A) include a linear or branched organopolysiloxane represented by the following formula (1-1) or formula (1-2).

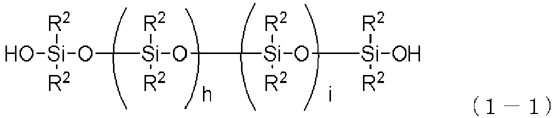

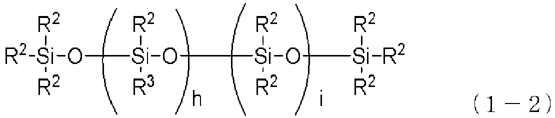

In the formula (1-1) and the formula (1-2), R² each independently represents a substituted or unsubstituted monovalent hydrocarbon group having 1 to 20 carbon atoms, preferably 1 to 10 carbon atoms. Examples of the R² include the same ones as the above-mentioned monovalent hydrocarbon groups including alkyl groups such as a methyl group, an ethyl group, a propyl group, and a butyl group, aryl groups such as a phenyl group, alkenyl groups such as a vinyl group and a propenyl group, etc. In particular, a methyl group is preferable. R³ each independently represents a hydrolysable group such as a hydroxy group, a methoxy, and an ethoxy, a substituted or unsubstituted monovalent hydrocarbon group having 1 to 20 carbon atoms, preferably 1 to 10 carbon atoms, or a group represented by the following formula (2-1) or the following formula (2-2), provided that the compound represented by the formula (1-2) has at least two hydroxy groups in a molecule. Examples of the monovalent hydrocarbon group include alkyl groups such as a methyl group, an ethyl group, a propyl group, and a butyl group, aryl groups such as a phenyl group, alkenyl groups such as a vinyl group and a propenyl group, etc.

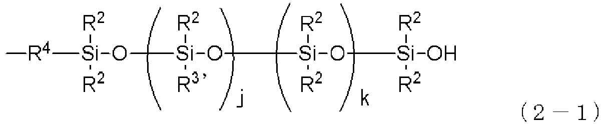

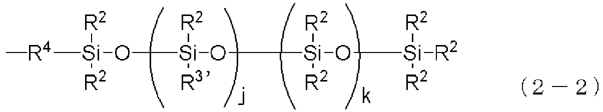

In the formula (2-1) and the formula (2-2), R⁴ represents an oxygen atom or an alkylene group having 2 to 10 carbon atoms, preferably 2 to 6 carbon atoms. In addition, R² is as described above, and R^{3'} is a group similar to R³.

"h", "i", "j", and "k" can be numbers at which the absolute viscosity of the component (A) at 25°C becomes 10,000 mP·s or higher.

### <Component (B)>

The component (B) is an organohydrogenpolysiloxane having at least two hydrogen atoms (SiH groups) bonded directly to a silicon atom in one molecule. A conventionally known organohydrogenpolysiloxane can be used as the organohydrogenpolysiloxane. The molecular structure of the organohydrogenpolysiloxane can be any of linear, branched, or cyclic.

The absolute viscosity at 25°C is not particularly limited, but is preferably within the range of several mPa·s to several tens of thousands of mPa·s, and in view of workability, more preferably has 5 mPa·s to 10,000 mPa·s. The component particularly preferably has an absolute viscosity at 25°C of 10 mPa·s to 8,000 mPa·s, further preferably 10 to 5,000 mPa·s.

Examples of the organohydrogenpolysiloxane of the component (B) include compounds represented by the following formula (2).

(R^{1'}₃SiO_{1/2})₁(R^{1'}₂HSiO_{1/2})ₘ

(R^{1'}₂SiO_{2/2})ₙ(R¹HSiO_{2/2})ₒ

(R¹SiO_{3/2})ₚ(HSiO_{3/2})_{q}(SiO_{4/2})ᵣ ··· (2)

In the formula (2), R^{1'} each independently represents an alkoxy group such as a methoxy group or an ethoxy group, or a substituted or unsubstituted monovalent hydrocarbon group having 1 to 20 carbon atoms, preferably 1 to 10 carbon atoms. Examples of the monovalent hydrocarbon group include alkyl groups such as a methyl group, an ethyl group, a propyl group, a butyl group, a pentyl group, a hexyl group, a heptyl group, an octyl group, a nonyl group, and a decyl group; cycloalkyl groups such as a cyclopentyl group and a cyclohexyl group; aryl groups such as a phenyl group, a naphthyl group, and a tolyl group; halogenated alkyl groups which are obtained by substituting some or all of the hydrogen atoms bonded to the carbon atoms of these groups with a halogen atom such as chlorine and fluorine; and the like. In particular, alkyl groups such as a methyl group, an ethyl group, a propyl group, and a butyl group are preferable, and a methyl group is particularly preferable.

In the formula (2), m+o+q is 2 or more. 1+m+n+o+p+q+r is not particularly limited, but is preferably a number at which the absolute viscosity of the component (B) organohydrogenpolysiloxane at 25°C comes within the range of several mPa·s to several tens of thousands of mPa·s. More preferably, "l" and "m" are each independently numbers of 2 to 100, "n" is a number of 0 to 500, "o" is a number of 3 to 500, and "p", "q", and "r" are each independently numbers of 0 to 100.

More specific examples of the component (B) include those like the following formulae (3-1) to (3-3).

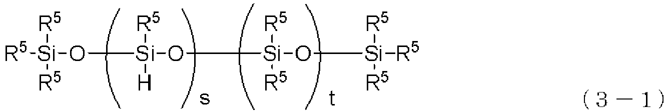

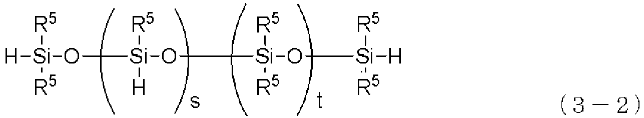

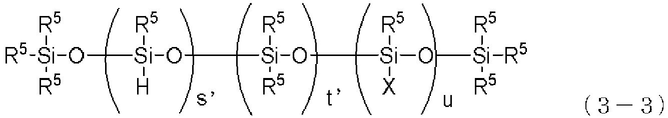

In the above formulae, R⁵ each independently represents a substituted or unsubstituted monovalent hydrocarbon group having 1 to 20 carbon atoms, preferably 1 to 10 carbon atoms. Examples of the monovalent hydrocarbon group include alkyl groups such as a methyl group, an ethyl group, a propyl group, a butyl group, a pentyl group, a hexyl group, a heptyl group, an octyl group, a nonyl group, and a decyl group; cycloalkyl groups such as a cyclopentyl group and a cyclohexyl group; aryl groups such as a phenyl group, a naphthyl group, and a tolyl group; halogenated alkyl groups which are obtained by substituting some or all of the hydrogen atoms bonded to the carbon atoms of these groups with a halogen atom such as chlorine and fluorine; and the like. In particular, alkyl groups such as a methyl group, an ethyl group, a propyl group, and a butyl group are preferable, and a methyl group is particularly preferable.

In addition, in the formula (3-3), X is a group represented by the following formula (4-1) or (4-2).

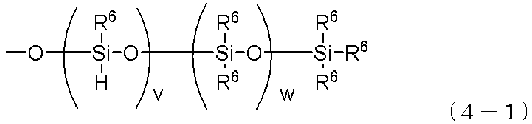

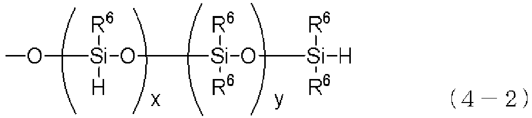

In the above formulae, R⁶ each independently represents a substituted or unsubstituted monovalent hydrocarbon group having 1 to 20 carbon atoms, preferably 1 to 10 carbon atoms. Examples of the monovalent hydrocarbon group include alkyl groups such as a methyl group, an ethyl group, a propyl group, a butyl group, a pentyl group, a hexyl group, a heptyl group, an octyl group, a nonyl group, and a decyl group; cycloalkyl groups such as a cyclopentyl group and a cyclohexyl group; aryl groups such as a phenyl group, a naphthyl group, and a tolyl group; halogenated alkyl groups which are obtained by substituting some or all of the hydrogen atoms bonded to the carbon atoms of these groups with a halogen atom such as chlorine and fluorine; and the like. In particular, alkyl groups such as a methyl group, an ethyl group, a propyl group, and a butyl group are preferable, and a methyl group is particularly preferable.

In the above formulae, "s" and "x" are integers of 2 to 500, "u" is an integer of 1 to 500, and "t", "s'", "t'", "v", "w", and "y" are integers of 0 to 500. These integers can be selected so that at least two or more hydrogen atoms bonded to a silicon atom are contained in one molecule.

The blended amount of the component (B) is 10 to 100 parts by mass, preferably 10 to 60 parts by mass relative to 100 parts by mass of the component (A).

One kind of the component (B) may be used, or two or more kinds thereof may be used in combination.

### <Component (C)>

Water is blended in the inventive release agent for tire-molding as the component (C). The blended amount of the water is 10 to 10,000 parts by mass, preferably 200 to 5,000 parts by mass relative to 100 parts by mass of the component (A).

### <(D) Polyvinyl Alcohol>

The component (D) is a polyvinyl alcohol. The component (D) can enhance the viscosity of the release agent composition for tire-molding to a rubber surface, prevent dripping on application of the release agent to a rubber surface, and enhance workability.

As the polyvinyl alcohol of the component (D), a polyvinyl alcohol obtained by saponifying a vinyl polyacetate is generally used, but the polyvinyl alcohol is not limited thereto. For example, it is possible to use a homopolymer of a vinyl ester other than vinyl acetate such as vinyl trifluoroacetate, vinyl formate, vinyl propionate, vinyl butyrate, vinyl pivalate, vinyl 2-ethylhexanoate, vinyl caprylate, vinyl caprate, vinyl laurate, vinyl myristate, vinyl palmitate, vinyl methacrylate, vinyl crotonate, vinyl sorbate, vinyl benzoate, vinyl cinnamate, vinyl t-butylbenzoate, and vinyl versatate; or a polyvinyl alcohol obtained by saponifying a copolymer containing at least the two of these vinyl esters and vinyl acetate.

The average polymerization degree of these polyvinyl alcohols is not particularly limited, but a range of 300 to 3000 is industrially common, and it is economically advantageous to select from this range. Preferably, the average polymerization degree is 500 to 2500, and particularly preferably, the average polymerization degree is 700 to 2000.

Meanwhile, the saponification degree of the polyvinyl alcohols is not particularly limited. A range of 80 mol% or higher is industrially common, and it is economically advantageous to select from this range. The saponification degree of the polyvinyl alcohol to be used is preferably 85 mol% or higher.

In addition, the viscosity of the polyvinyl alcohol is not particularly limited, but the viscosity of a 4% aqueous polyvinyl alcohol solution is preferably 3.0 to 60.0, particularly preferably 5.0 to 40.0.

In addition, a modified polyvinyl alcohol, which is a copolymer of the above polyvinyl alcohol and another monomer can also be used. As the other monomer, at least one kind can be used, such as an unsaturated polyvalent carboxylic acid or a salt thereof, alkyl ester, complete alkyl ester, an anhydride, an amide, an imide, and a nitrile; an unsaturated sulfonic acid or a salt thereof; a vinyl ether; an ethylene; vinyl chloride; and an α olefin having 3 to 30 carbon atoms, for example. The modified polyvinyl alcohol can be obtained by, for example, saponifying a copolymer of vinyl acetate and/or a vinyl ester other than vinyl acetate mentioned above and the above-described other monomer.

One kind of the component (D) may be used, or two or more kinds thereof may be used in combination.

The blended amount of the component (D) is 2 to 70 parts by mass, preferably 5 to 50 parts by mass relative to 100 parts by mass of the component (A).

### <Component (E)>

The inventive release agent composition for tire-molding can further contain (E) a surfactant in addition to the components (A) to (D). The coating property of the composition can be enhanced by blending the component (E). There are no particular restrictions regarding the component (E) surfactant, and examples include nonionic surfactants, anionic surfactants, cationic surfactants, zwitterionic surfactants, and the like. Examples of the nonionic surfactants include a polyoxyethylene alkyl ether, a polyoxyethylene polyoxypropylene alkyl ether, a polyoxyethylene alkyl phenyl ether, a polyethylene glycol fatty acid ester, a polyoxyethylene sorbitan fatty acid ester, a polyoxyethylene sorbit fatty acid ester, a polyoxyethylene glycerin fatty acid ester, a polyglycerin fatty acid ester, a propylene glycol fatty acid ester, a polyoxyethylene castor oil, a polyoxyethylene hard castor oil, a polyoxyethylene hard castor oil fatty acid ester, a polyoxyethylene alkylamine, a polyoxyethylene fatty acid amide, a polyoxyethylene-modified organopolysiloxane, a polyoxyethylene-polyoxypropylene-modified organopolysiloxane, etc.

Examples of the anionic surfactants include an alkyl sulfate ester salt, a polyoxyethylene alkyl ether sulfate ester salt, a polyoxyethylene alkyl phenyl ether sulfate ester salt, a sulfate ester salt of a fatty acid alkylolamide, an alkylbenzene sulfonate, a polyoxyethylene alkyl phenyl ether sulfonate, an α-olefin sulfonate, an α-sulfo fatty acid ester salt, an alkyl naphthalene sulfonic acid, an alkyl diphenyl ether disulfonate, an alkane sulfonate, an N-acyl taurate, a dialkyl sulfosuccinate, a monoalkyl sulfosuccinate, a polyoxyethylene alkyl ether sulfosuccinate, a fatty acid salt, a polyoxyethylene alkyl ether carboxylate, an N-acylamino acid salt, a monoalkyl phosphate ester salt, a dialkyl phosphate ester salt, a polyoxyethylene alkyl ether phosphate ester salt, and the like.

Examples of the cationic surfactants include an alkyltrimethylammonium salt, a dialkyldimethylammonium salt, a polyoxyethylene alkyl dimethyl ammonium salt, a dipolyoxyethylene alkyl methyl ammonium salt, a tripolyoxyethylene alkyl ammonium salt, an alkylbenzyl dimethyl ammonium salt, an alkyl pyridium salt, a monoalkylamine salt, a monoalkylamidoamine salt, and the like.

Examples of the zwitterionic surfactants include alkyl dimethylamine oxide, alkyl dimethyl carboxybetaine, alkylamidopropyl dimethylcarboxybetaine, alkylhydroxysulfobetaine, alkylcarboxymethylhydroxyethyl imidazolinium betaine, and the like.

In particular, a nonionic surfactant is preferable, and a polyoxyethylene alkyl ether, a polyoxyethylene polyoxypropylene alkyl ether, and polyoxyethylene alkyl phenyl ethers are particularly preferable.

One of these may be used, or an appropriate combination of two or more thereof may be used. When the component (E) is blended, the blended amount of the component (E) is preferably 5 to 50 parts by mass, more preferably 10 to 40 parts by mass relative to 100 parts by mass of the component (A).

### <Component (F)>

The inventive release agent composition for tire-molding can further contain (F) a condensation reaction catalyst. The condensation reaction catalyst, which is the component (F) is not particularly limited as long as a condensation reaction progresses. Examples thereof include organic metal compounds such as organic tin compounds, organic zinc compounds, organic iron compounds, organic titanium compounds, organic bismuth compounds, organic zirconium compounds, organic aluminum compounds, organic cerium compounds, organic indium compounds, and organic yttrium compounds. Specific examples include organic acid metal salts such as dibutyltin dilaurate, dibutyltin dioctate, dioctyltin dilaurate, dioctyltin diversatate, dibutyltin bisoleyl maleate, tin octylate, zinc stearate, zinc octylate, zinc acetate, iron octylate, titanium octylate, bismuth octylate, zirconium octylate, cerium octylate, indium octylate, and yttrium octylate. Note that these condensation reaction catalysts are preferably emulsified and dispersed in water by using a surfactant beforehand and used in the form of an emulsion, unless the catalysts are water-soluble. When the component (F) is blended, the blended amount of the component (F) is preferably 0.1 to 10 parts by mass, more preferably 0.5 to 10 parts by mass relative to 100 parts by mass of the component (A).

Specific examples of the component (F) include ORGATIX TA-8, ORGATIX TA-21, ORGATIX TA-23, ORGATIX TA-30, ORGATIX TC-100, ORGATIX TC-401, ORGATIX TC-710, ORGATIX TC-810, ORGATIX TC-300, ORGATIX TC-310, ORGATIX TC-400, and the like manufactured by Matsumoto Fine Chemical Co., Ltd.

### <Inorganic Powder or Organic Powder>

Furthermore, an inorganic powder or an organic powder can be blended in the inventive release agent composition for tire-molding. Examples of the inorganic powder to be used include silica, mica, kaolin, talc, calcium carbonate, magnesium carbonate, zinc carbonate, graphite, carbon black, carbon fluoride powder, titanium oxide, boron nitride, and the like. Meanwhile, examples of the organic powder to be used include fluorine resin powders such as Teflon (registered trademark) powder, fine particle silicone resin powder, nylon powder, polystyrene powder, paraffin wax, fatty acid amide, fatty acid soap, fatty acid amine salt, and the like. One kind of each of the organic powder and the inorganic powder can be used, or two or more kinds can be used in combination.

### [Bladder for Tire-Molding]

The inventive bladder for tire-molding is coated with the above-described release agent composition for tire-molding. The inventive bladder for tire-molding can be a tire bladder, which is commonly used for molding and vulcanizing tires, coated with the release agent composition for tire-molding.

The timing and method of applying (coating) the release agent composition for tire-molding to the tire bladder are not particularly restricted. For example, a film including the inventive release agent composition for tire-molding can be formed on a tire bladder surface by the following method. That is, the surface of a tire bladder is brushed, then the surface is cleaned with a solvent, by an air blow, and so forth, and dried at room temperature or under conditions of heating. Next, the inventive release agent composition for tire-molding is applied to the tire bladder surface by a known method such as brushing, spraying, immersion, etc. After applying the inventive release agent composition for tire-molding to the tire bladder, it is possible to dry by only air-drying. However, the release agent and the tire bladder can be adhered firmly when dried by heating, preferably at about 80°C to 250°C, more preferably at 120°C to 200°C. The drying time is not particularly limited either, but about 3 minutes to about 2 hours is sufficient, more preferably about 5 minutes to 1 hour.

In the inventive bladder for tire-molding, the tire bladder and the release agent are firmly adhered. Therefore, the film including the release agent does not become easily detached from the tire bladder, the sliding property of the surface is enhanced, and the release when molding and vulcanizing a tire is improved. As a result, it becomes possible to vulcanize/release tires repeatedly just by applying the release agent to the tire bladder once, so that tires can be produced efficiently.

The inventive bladder for tire-molding can be applied to the tires for various types of vehicles such as bicycles, motorcycles, passenger cars, trucks, buses, trailers, forklifts, and tractors, and tires for airplanes. The bladder for tire-molding can be used regardless of the type of the tire, bias, radial, studless, etc.

When using the inventive release agent composition for tire-molding as a release agent for tire-molding, it is possible to emulsify the composition with a surfactant such as a nonionic or anionic surfactant or a cationic surfactant, or a water-soluble polymer having an emulsifying effect, and then used.

To emulsify the inventive release agent composition for tire-molding, it is possible to mix the organopolysiloxane and organohydrogenpolysiloxane of the components (A) and (B) of the present invention, a surfactant, and/or a water-soluble polymer having an emulsifying effect, and then emulsify this with an emulsifier such as a homomixer, a homogenizer, a colloid mill, or a line mixer.

The present inventors consider the mechanism of action of the inventive release agent composition for tire-molding as follows. In the inventive release agent composition for tire-molding, the component (A) and the component (B) have functional groups that can react with one another, and react by being exposed to conditions of high temperature during tire-molding, forming a film. This film has a releasing effect, and by adhering to the tire bladder, repeated molding and vulcanization of tires become possible.

In addition, the inventive release agent composition for tire-molding contains a polyvinyl alcohol as the component (D). Polyvinyl alcohol forms a film even on its own. Therefore, the film formed by the component (A) and the component (B) becomes stronger, and the adhesiveness to the tire bladder becomes enhanced. As described, since the adhesiveness of the film is enhanced, it is possible to suppress the film of a releasing layer including the inventive release agent composition for tire-molding peeling off from the tire bladder even when tires are repeatedly molded and vulcanized.

Accordingly, it is considered that it is possible to raise the number of times tires can be molded and vulcanized in succession dramatically to ten times or more by using the inventive release agent composition for tire-molding.

### EXAMPLE

Hereinafter, the present invention will be described in further detail with reference to Examples and Comparative Examples. However, the present invention is not limited to these Examples.

### [Preparation Example 1]:

65 parts by mass of an organopolysiloxane (component (A)) shown by ((CH₃)₂(OH)SiO_{1/2})₂((CH₃)₂SiO_{2/2})ₙ (n is 3000) and having an absolute viscosity at 25°C of 10,000,000 mPa·s, 13 parts by mass of a polyoxyethylene alkyl ether (component (E)) (C12 to 14, branched, HLB (Hydrophilic-Lipophilic Balance): 14.5), and 12 parts by mass of water (component (C)) were stirred with HIVIS MIX (manufactured by PRIMIX Corporation) at 20 to 30 rpm for 60 minutes. Subsequently, 10 parts by mass of water (component (C)) was added, and the resultant was stirred with HIVIS MIX at 20 to 30 rpm for 30 minutes to obtain an emulsion (A-1).

### [Preparation Example 2]:

38 parts by mass of an organohydrogenpolysiloxane (component (B)) shown by ((CH₃)₂HSiO₁/2)₂((CH₃)HSiO_{2/2})₄₀, 3.4 parts by mass of a polyoxyethylene lauryl ether (HLB: 9.2) (component (E)), and 0.6 parts by mass of a polyoxyethylene lauryl ether (HLB: 17.3) (component (E)) were mixed for 30 minutes using a homomixer at 2000 rpm, and emulsified and dispersed in 14 parts by mass of water (component (C)). Subsequently, the resultant was diluted by adding 44 parts by mass of water (component (C)) to obtain an emulsion (B-1).

### [Preparation Example 3]:

18 parts by mass of a polyvinyl alcohol (saponification degree: 86.5 to 89.5 mol%, 4% aqueous solution viscosity: 16.0 to 20.0 mPa·s) (component (D)) was dissolved in 82 parts by mass of water (component (C)) to obtain a composition (D-1).

### [Preparation Example 4]:

24 parts by mass of a zinc acetate dihydrate (component (F)) was dissolved in 76 parts by mass of water (component (C)) to obtain a composition (F-1).

### [Preparation Example 5]:

13 parts by mass of an organopolysiloxane (component (A)) shown by ((CH₃)₂(OH)SiO_{1/2})₂((CH₃)₂SiO_{2/2})ₙ (n is 3000) and having an absolute viscosity at 25°C of 10,000,000 mPa·s, 2 parts by mass of an organohydrogenpolysiloxane (component (B)) shown by ((CH₃)₂HSiO_{1/2})₂((CH₃)HSiO_{2/2})₄₀, and 10 parts by mass of the aqueous polyvinyl alcohol solution composition (D-1) prepared in Preparation Example 3 were stirred with a HIVIS MIX at 20 to 30 rpm for 60 minutes. Subsequently, 17 parts by mass of the aqueous polyvinyl alcohol solution composition (D-1) prepared in Preparation Example 3 and 58 parts by mass of water (component (C)) were added, and the resultant was mixed by using a homomixer at 2000 rpm for 30 minutes to obtain an emulsion (G-1).

### [Example 1]

A release agent composition for tire-molding of Example 1 was prepared with the formulation of: 21.85 wt% of the emulsion (A-1) obtained in Preparation Example 1; 4.96 wt% of the emulsion (B-1) obtained in Preparation Example 2; 30.14 wt% of the composition (D-1) obtained in Preparation Example 3; 1.22 wt% of the composition (F-1) obtained in Preparation Example 4; and 41.84 wt% of water. The content of each component in the release agent composition for tire-molding of Example 1 was 13.26 parts by mass of the component (B), 529.13 parts by mass of the component (C), 38.19 parts by mass of the component (D), 21.40 parts by mass of the component (E), and 2.06 parts by mass of the component (F) relative to 100 parts by mass of the component (A).

### [Example 2]

A release agent composition for tire-molding of Example 2 was prepared with the formulation of: 18.50 wt% of the emulsion (A-1) obtained in Preparation Example 1; 14.50 wt% of the emulsion (B-1) obtained in Preparation Example 2; 12.50 wt% of the composition (D-1) obtained in Preparation Example 3; 1.50 wt% of the composition (F-1) obtained in Preparation Example 4; and 53.00 wt% of water. The content of each component in the release agent composition for tire-molding of Example 2 was 45.28 parts by mass of the component (B), 639.25 parts by mass of the component (C), 18.71 parts by mass of the component (D), 24.82 parts by mass of the component (E), and 2.99 parts by mass of the component (F) relative to 100 parts by mass of the component (A).

### [Example 3]

A release agent composition for tire-molding of Example 3 was prepared with the formulation of: 98.5 wt% of the emulsion (G-1) obtained in Preparation Example 5; and 1.50 wt% of the composition (F-1) obtained in Preparation Example 4. The content of each component in the release agent composition for tire-molding of Example 3 was 15.38 parts by mass of the component (B), 616.46 parts by mass of the component (C), 37.38 parts by mass of the component (D), and 2.81 parts by mass of the component (F) relative to 100 parts by mass of the component (A).

### [Comparative Example 1]

A composition of Comparative Example 1 was prepared with the formulation of: 21.00 wt% of the emulsion (A-1) obtained in Preparation Example 1; 15.00 wt% of the emulsion (B-1) obtained in Preparation Example 2; 1.50 wt% of the composition (F-1) obtained in Preparation Example 4; and 62.50 wt% of water. In Comparative Example 1, polyvinyl alcohol was not added. The content of each component in the composition of Comparative Example 1 was 41.76 parts by mass of the component (B), 563.81 parts by mass of the component (C), 24.40 parts by mass of the component (E), and 2.64 parts by mass of the component (F) relative to 100 parts by mass of the component (A).

### [Comparative Example 2]

A composition of Comparative Example 2 was prepared with the formulation of: 20.71 wt% of the emulsion (A-1) obtained in Preparation Example 1; 14.79 wt% of the emulsion (B-1) obtained in Preparation Example 2; 1.38 wt% of the composition (D-1) obtained in Preparation Example 3; 1.48 wt% of the composition (F-1) obtained in Preparation Example 4; and 61.64 wt% of water. The content of each component in the composition of Comparative Example 2 was 41.76 parts by mass of the component (B), 572.22 parts by mass of the component (C), 1.85 parts by mass of the component (D), 24.40 parts by mass of the component (E), and 2.64 parts by mass of the component (F) relative to 100 parts by mass of the component (A).

### [Evaluation Method and Results]

Each release agent composition for tire-molding of Examples 1 to 3 and each composition of Comparative Examples 1 and 2 were applied to a tire bladder and dried at 120°C for 5 minutes. Tires were molded and vulcanized using tire bladders with no reapplication, and successive release and the inner appearance of the vulcanized tires were evaluated. The inner appearance of the tires were evaluated as follows.
Inner appearance "Good": there are no dapples/entrapped air, etc. at all
(Here, dapples refer to the adhesion of tire rubber and bladder or release failure.)
Inner appearance "Poor": dapples/entrapped air can be observed in places
Inner appearance "Bad": adhesion of the tire rubber and the bladder or release failure occurred

Table 1 shows the formulation (wt%) and content in Examples 1 to 3 and Comparative Examples 1 and 2, and the number of successive releases and the evaluation of the inner appearance when tires were molded and vulcanized using the release agent compositions for tire-molding of Examples 1 to 3 and the compositions of Comparative Examples 1 and 2 on tire bladders.

**[Table 1]**

| | | Example 1 | Example 2 | Example 3 | Comparative Example 1 | Comparative Example 2 |
|---|---|---|---|---|---|---|
| Formulation | (A-1) | 21.85 | 18.50 | | 21.00 | 20.71 |
| | (B-1) | 4.96 | 14.50 | | 15.00 | 14.79 |
| | (D-1) | 30.14 | 12.50 | | 0.00 | 1.38 |
| | (F-1) | 1.22 | 1.50 | 1.5 | 1.50 | 1.48 |
| | (C) | 41.84 | 53.00 | | 62.50 | 61.64 |
| | (G-1) | | | 98.5 | | |
| Content | (A) | 100.00 | 100.00 | 100.00 | 100.00 | 100.00 |
| | (B) | 13.26 | 45.28 | 15.38 | 41.76 | 41.76 |
| | (C) | 529.13 | 639.25 | 616.46 | 563.81 | 572.22 |
| | (D) | 38.19 | 18.71 | 37.38 | 0.00 | 1.85 |
| | (E) | 21.40 | 24.82 | 0.00 | 24.40 | 24.40 |
| | (F) | 2.06 | 2.99 | 2.81 | 2.64 | 2.64 |
| Number of successive releases | | 35 | 40 | 35 | 25 | 30 |
| Inner appearance | | Good | Good | Good | Bad | Poor |

As shown in the above Table 1, the number of successive releases was respectively 35, 40, and 35 on molding and vulcanizing tires by applying the release agent compositions for tire-molding of Examples 1 to 3 on tire bladders. The number of successive releases on using the compositions of Comparative Examples 1 and 2 were respectively 25 and 30. The result was that the number of successive releases was greater when the release agent compositions for tire-molding of the Examples were used than when the compositions of the Comparative Examples were used.

Moreover, the tires after molding and vulcanizing when the release agent compositions for tire-molding of Examples 1 to 3 were used all had no dapples, entrapped air, or the like at all, and the inner appearance was favorable. On the other hand, when the composition of Comparative Example 1, having no polyvinyl alcohol added, was used, adhesion of the tire rubber and the bladder and release failure (dapples) occurred. Meanwhile, when the composition of Comparative Example 2, having a polyvinyl alcohol added only by a smaller proportion than 2 parts by mass relative to 100 parts by mass of the component (A), was used, the dapples were resolved, but the result was that entrapped air was formed on the inner surface of the tires.

As described, it was confirmed that with the inventive release agent composition for tire-molding and bladder for tire-molding, the release on molding and vulcanizing tires can be enhanced, and furthermore, the number of successive releases can be dramatically enhanced compared to before.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A release agent composition for tire-molding comprising:
(A) 100 parts by mass of an organopolysiloxane containing two or more hydroxy groups bonded to a silicon atom in one molecule and having a viscosity at 25°C of 10,000 mPa·s or higher;
(B) 10 to 100 parts by mass of an organohydrogenpolysiloxane containing two or more hydrogen atoms bonded to a silicon atom in one molecule relative to 100 parts by mass of the component (A);
(C) 10 to 10,000 parts by mass of water relative to 100 parts by mass of the component (A); and
(D) 2 to 70 parts by mass of a polyvinyl alcohol relative to 100 parts by mass of the component (A).

2. The release agent composition for tire-molding according to claim 1, further comprising: (E) 5 to 50 parts by mass of a surfactant relative to 100 parts by mass of the component (A).

3. The release agent composition for tire-molding according to claim 1 or 2, further comprising:
(F) 0.1 to 10 parts by mass of a condensation reaction catalyst relative to 100 parts by mass of the component (A) .

4. A bladder for tire-molding coated with the release agent composition for tire-molding according to any one of claims 1 to 3.
